# EUROPÄISCHE PATENTANMELDUNG

(11) **EP 1 950 444 A2**
(43) Veröffentlichungstag der Anmeldung: **30.07.2008**
(21) Anmeldenummer: 08000756.0
(22) Anmeldetag: 16.01.2008
(51) Int. Cl.: F16D 25/08

(54) **Kupplungsanordnung**

(30) Priorität: 23.01.2007 DE 102007003440
(71) Anmelder: ZF FRIEDRICHSHAFEN AG, 88038 Friedrichshafen (DE)
(72) Erfinder: Greubel, Marco, 97714 Oerlenbach (DE); Snima, Khalid Abu, Dr., 97421 Schweinfurt (DE)

(57) **Zusammenfassung**

Eine Kopplungsanordnung zur wahlweisen Drehkopplung einer Eingangswelle, insbesondere eines Kompressors in einem Fahrzeug, mit einem Antriebsorgan, insbesondere Antriebsrad, umfasst einen mit dem Antriebsrad (12) zur gemeinsamen Drehung um eine Drehachse (A) gekoppelten oder zu koppelnden ersten Reibelemententräger (18), mit welchem die Reibelemente (28) einer ersten Gruppe (28) von Reibelementen drehfest gekoppelt sind, einen mit der Eingangswelle (14) zur gemeinsamen Drehung um die Drehachse (A) gekoppelten oder zu koppelnden zweiten Reibelemententräger (30), mit welchem die Reibelemente (50) einer zweiten Gruppe (52) von Reibelementen drehfest gekoppelt sind, an einer in Richtung von einem freien Ende (34) der Eingangswelle (14) weg weisenden ersten axialen Seite der beiden Gruppen (28, 52) von Reibelementen eine bezüglich des zweiten Reibelemententrägers (30) axial abgestützte Widerlagerplatte (54), an einer in Richtung freies Ende (34) der Eingangswelle (14) weisenden zweiten axialen Seite der beiden Gruppen (28, 52) von Reibelementen eine durch einen Kraftspeicher (58) in Richtung auf die Reibelemente (26, 50) zu beaufschlagte Anpressplatte (56), wobei der Kraftspeicher (58) ringartig ausgebildet ist und in einem radial äußeren Abstützbereich (60) bezüglich des zweiten Reibelemententrägers (30) axial abgestützt ist, in einem radial inneren Betätigungsbereich (66) durch ein Betätigungskraftübertragungsorgan (68) betätigbar ist und in einem radial zwischen dem Abstützbereich (60) und dem Betätigungsbereich (66) liegenden Beaufschlagungsbereich (64) die Anpressplatte (58) beaufschlagt.

## Beschreibung

Die vorliegende Erfindung betrifft eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte.

Aus der DE 80 21 411 U1 ist eine Kopplungsanordnung bekannt, über welche eine Eingangswelle eines in einem Fahrzeug vorzusehenden Kompressors zur Erzeugung von Druckluft mit einem Antriebsrad wahlweise zur gemeinsamen Drehung gekoppelt werden kann. Im Kopplungszustand kann über das von einem Antriebsaggregat zur Drehung angetriebene Antriebsrad und die Kopplungsanordnung dann auch die Eingangswelle des Kompressors zur Drehung angetrieben werden, um den Kompressor zu Betreiben.

Bei dieser bekannten Kopplungsanordnung umfasst der Kraftspeicher eine bzw. mehrere in Umfangsrichtung um eine Drehachse verteilte und in Achsrichtung wirkende Schraubendruckfedern. Diese stützen sich über einen Abstützring axial bezüglich des zweiten Reibelemententrägers ab und stützen sich über Abstütztöpfe axial an der Anpressplatte ab. Durch ihren vorgespannten Einbau pressen somit diese Schraubendruckfedern die Anpressplatte in Richtung auf die Widerlagerplatte zu, so dass zwischen der Anpressplatte und der Widerlagerplatte die alternierend angeordneten Reibelemente der beiden Gruppen von Reibelementen eingespannt werden und ein Drehmoment übertragen werden kann.

Um diese Kopplungsanordnung in einen Ausrückzustand zu bringen, also die Drehmomentübertragungsverbindung zwischen dem Antriebsrad und der Eingangswelle des Kompressors zu unterbinden, wirkt eine als Betätigungskrafterzeugungsanordnung wirksame Zylinder/Kolben-Einheit auf ein Drehentkopplungslager ein. Das Drehentkopplungslager wiederum belastet mehrere als Betätigungskraftübertragungsorgane wirksame Bolzen, welche die Widerlagerplatte und die Reibelemente der zweiten Gruppe von Reibelementen axial durchgreifen und mit der Anpressplatte axial fest gekoppelt sind. Somit kann entgegen der Vorspannwirkung der Schraubendruckfedern die Anpressplatte axial in Richtung von der Widerlagerplatte weg verschoben werden, wenn in einen Zylinderraum der Zylinder/Kolben-Einheit Druckfluid, im Allgemeinen Druckluft, eingeleitet wird und somit eine Kolbenbaugruppe der Zylinder/Kolben-Einheit das Drehentkopplungslager und somit die mit der Anpressplatte fest gekoppelten Bolzen axial verschiebt.

Es ist die Aufgabe der vorliegenden Erfindung, eine Kopplungsanordnung zur wahlweisen Drehkopplung einer Eingansgwelle, insbesondere eines Kompressors in einem Fahrzeug, mit einem Antriebsorgan, insbesondere Antriebsrad, vorzusehen, mit welcher bei optimierter Bauraumausnutzung verbesserte Betätigungsverhältnisse erlangt werden können.

Gemäß einem ersten Aspekt der vorliegenden Erfindung wird diese Aufgabe gelöst durch eine Kopplungsanordnung zur wahlweisen Drehkopplung einer Eingangswelle, insbesondere eines Kompressors in einem Fahrzeug, mit einem Antriebsorgan, insbesondere Antriebsrad, umfassend einen mit dem Antriebsrad zur gemeinsamen Drehung um eine Drehachse gekoppelten oder zu koppelnden ersten Reibelemententräger, mit welchem die Reibelemente einer ersten Gruppe von Reibelementen drehfest gekoppelt sind, einen mit der Eingangswelle zur gemeinsamen Drehung um die Drehachse gekoppelten oder zu koppelnden zweiten Reibelemententräger, mit welchem die Reibelemente einer zweiten Gruppe von Reibelementen drehfest gekoppelt sind, an einer in Richtung von einem freien Ende der Eingangswelle weg weisenden ersten axialen Seite der beiden Gruppen von Reibelementen eine bezüglich des zweiten Reibelemententrägers axial abgestützte Widerlagerplatte, an einer in Richtung freies Ende der Eingangswelle weisenden zweiten axialen Seite der beiden Gruppen von Reibelementen eine durch einen Kraftspeicher in Richtung auf die Reibelemente zu beaufschlagte Anpressplatte, wobei der Kraftspeicher ringartig ausgebildet ist und in einem radial äußeren Abstützbereich bezüglich des zweiten Reibelemententrägers axial abgestützt ist, in einem radial inneren Betätigungsbereich durch ein Betätigungskraftübertragungsorgan betätigbar ist und in einem radial zwischen dem Abstützbereich und dem Betätigungsbereich liegenden Beaufschlagungsbereich die Anpressplatte beaufschlagt.

Durch diese Ausgestaltung der Kopplungsanordnung bzw. des Kraftspeichers, beispielsweise als Tellerfeder bzw. Membranfeder, werden optimierte Hebelverhältnisse genutzt, um einerseits große Einrückkräfte erzielen zu können, wobei anderseits jedoch nur vergleichsweise geringe Betätigungskräfte erforderlich sind, um die Kopplungsanordnung in einen Ausrückzustand bringen zu können. Der ringartig ausgebildete Kraftspeicher wirkt mit seiner Radialerstreckung als einseitiger Hebel, so dass insbesondere die vergleichsweise große Erstreckungslänge zwischen dem radial außen liegenden Abstützbereich und dem radial innen liegenden Betätigungsbereich vorteilhaft genutzt werden kann.

Um eine effiziente Bauraumausnutzung zu erlangen, wird vorgeschlagen, dass das Betätigungskraftübertragungsorgan in einem an der ersten axialen Seite der beiden Gruppen von Reibelementen liegenden Bereich zur Durchführung von Betätigungsvorgängen mit einer Betätigungskrafterzeugungsanordnung zusammenwirkt und in einem an der zweiten axialen Seite der beiden Gruppen von Reibelementen liegenden Bereich mit dem Kraftspeicher zu dessen Betätigung zusammenwirkt.

Dabei ist vorzugsweise vorgesehen, dass das Betätigungskraftübertragungsorgan mit wenigstens einem Betätigungsabschnitt den zweiten Reibelemententräger axial durchgreift.

Die Betätigungskrafterzeugungsanordnung kann eine Zylinder/Kolben-Einheit umfassen, und es kann vorgesehen sein, dass eine Zylinderbaugruppe der Zylinder/Kolben-Einheit bezüglich eines die Eingangswelle aufnehmenden Gehäuses festgelegt oder festlegbar ist und dass eine Kolbenbaugruppe der Zylinder/Kolben-Einheit über ein Drehentkopplungslager mit dem Betätigungskraftübertragungsorgan zusammenwirkt.

Da bei der erfindungsgemäßen Kopplungsanordnung das Drehentkopplungslager zwischen dem Betätigungskraftübertragungsorgan und der Kolbenbaugruppe nur vergleichsweise kurz, nämlich zum Ausrücken der Kopplungsanordnung belastet wird, kann dieses entweder als Wälzkörperlager oder als Gleitlager ausgeführt sein.

Um die durch einen einseitigen Hebelaufbau gegebenen Verhältnisse besonders effizient nutzen zu können, wird weiterhin vorgeschlagen, dass der Beaufschlagungsbereich des Kraftspeichers näher am Abstützbereich als am Betätigungsbereich liegt.

Weiter betrifft die vorliegende Erfindung eine Kombination einer Eingangswelle, insbesondere eines Kompressors in einem Fahrzeug, mit einer erfindungsgemäßen Kopplungsanordnung, wobei die Eingangswelle in ihrem mit dem zweiten Reibelemententräger zur gemeinsamen Drehung um die Drehachse zu koppelnden Endbereich in Richtung zu einem freien Ende hin sich verjüngend ausgebildet ist und wobei der Betätigungsbereich des Kraftspeichers sich derart weit nach radial innen erstreckt, dass er sich mit dem nicht verjüngten Bereich der Eingangswelle radial überlappt oder auf dessen radialem Niveau endet.

Die vorliegende Erfindung wird nachfolgend mit Bezug auf die beiliegenden Figuren detailliert beschrieben. Es zeigt:
Fig. 1 eine Längsschnittansicht einer erfindungsgemäß aufgebauten Kopplungsanordnung;
Fig. 2 eine perspektivische Ansicht eines bei der Kopplungsanordnung der Fig. 1 eingesetzten Druckrings;
Fig. 3 eine der Fig. 2 entsprechende Darstellung eines alternativ ausgestalteten Druckrings.

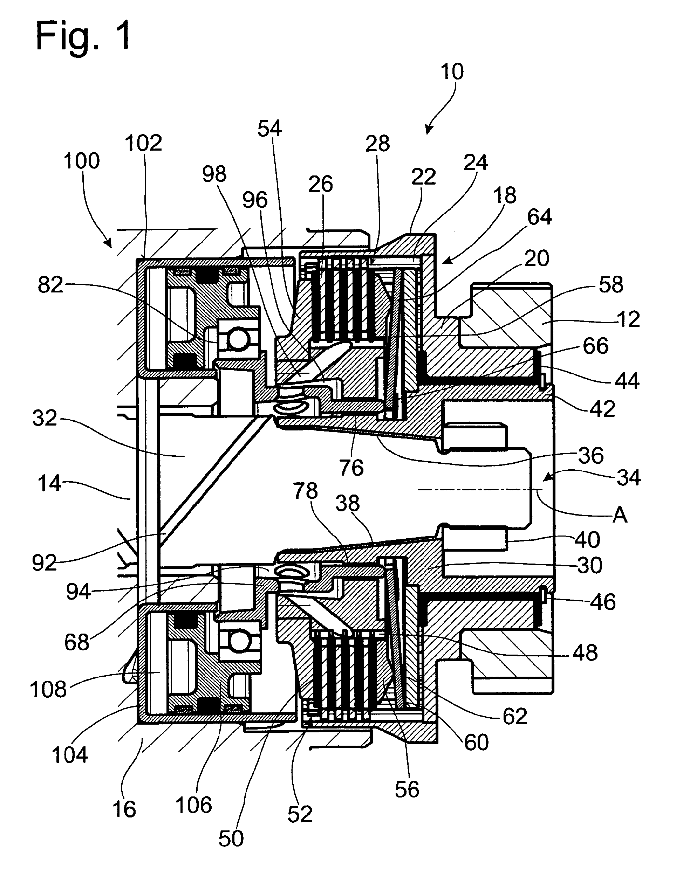

In Fig. 1 ist eine erfindungsgemäß aufgebaute Kopplungsanordnung allgemein mit 10 bezeichnet. Diese Kopplungsanordnung 10 dient dazu, wahlweise eine Drehkopplung zwischen einem beispielsweise als Zahnrad ausgestalteten Antriebsrad 12 und einer Eingangswelle 14 eines Kompressors herzustellen. Ein derartiger Kompressor kann in einem Fahrzeug, beispielsweise Lastkraftwagen, eingesetzt sein, um für verschiedene mit Druckluft zu betreibende Systembereiche die erforderliche Druckluft zu generieren. Dabei ist die Eingangswelle 14, die bei einem derartigen Kompressor als Kurbelwelle ausgebildet sein kann, in einem Gehäuse 16 aufgenommen und darin auch durch nicht dargestellte Lager radial und axial gelagert.

Die Kopplungsanordnung 10 umfasst einen ersten Reibelemententräger 18. Dieser ist zweiteilig aufgebaut und trägt mit einem ersten Teil 20 das Antriebsrad 12. Die Verbindung zwischen diesem ersten Teil 20 des ersten Reibelemententrägers 18 und dem Antriebsrad 12 kann beispielsweise durch Klemmsitz, Verschweißung oder in sonstiger Weise realisiert sein.

Ein radial außen mit dem ersten Teil 20 fest verbundenes zweites Teil 22 des ersten Reibelemententrägers 18 ist im Wesentlichen zylindrisch ausgestaltet und weist an seiner Innenumfangsfläche eine Verzahnung 24 auf, mit welcher die Reibelemente 26 einer ersten Gruppe 28 von Reibelementen mit entsprechenden Verzahnungen in Drehkopplungseingriff stehen, jedoch bezüglich des zweiten Teils 22 bzw. des ersten Reibelemententrägers 18 in Richtung einer Drehachse A bewegbar sind.

Ein zweiter Reibelemententräger 30 ist mit der Eingangswelle 14 drehfest verbunden. Dazu kann die Eingangswelle 14 an ihrem mit dem Antriebsrad 12 zu koppelnden Endbereich 32 einen konisch sich in Richtung zum freien Ende 34 der Eingangswelle 14 verjüngenden Abschnitt 36 aufweisen, auf welchen der zweite Reibelemententräger 30 mit einer entsprechend konisch geformten Innenöffnung 38 aufgesetzt und durch eine Fixiermutter 40 fixiert ist. Auf diese Art und Weise wird ein drehfester Klemmsitz erzeugt. In einem auch über das freie Ende 34 der Eingangswelle 14 sich hinaus erstreckenden Lagerabschnitt 42 des zweiten Reibelemententrägers 30 ist über eine Axial/Radial-Lageranordnung 44 der erste Reibelemententräger 18, nämlich dessen erstes Teil 20, axial und radial gelagert. Diese Lageranordnung 44 kann als Gleitlageranordnung ausgebildet sein, die in einer axialen Richtung durch einen Sicherungsring 46 bezüglich des zweiten Reibelemententrägers 30 fixiert ist.

Der zweite Reibelemententräger 30 weist eine Außenverzahung 48 auf, mit welcher die Reibelemente 50 einer zweiten Gruppe 52 von Reibelementen drehfest gekoppelt sind, jedoch bezüglich des zweiten Reibelemententrägers 30 axial bewegbar sind. Man erkennt, dass jeweils Reibelemente 26 der ersten Gruppe 28 von Reibelementen und Reibelemente 50 der zweite Gruppe 52 von Reibelementen einander alternierend abwechseln.

Der zweite Reibelemententräger 30 kann, wie dies in der Fig. 1 auch erkennbar ist, einteilig ausgebildet sein, also an einem Bauteil sowohl die Verzahnung 48 zur Kopplung mit den Reibelementen 50, den sich verjüngenden Abschnitt 36 und den über die Lageranordnung 44 den ersten Reibelemententräger 18 tragenden Abschnitt aufweisen. Es ist selbstverständlich, dass auch der zweite Reibelemententräger 30 aus mehreren Teilen zusammengefügt sein kann, wie dies beim ersten Reibelemententräger 18 der Fall ist.

Mit dem zweiten Reibelemententräger 30 ist ferner eine Widerlagerplatte 54 fest verbunden. Diese ist an einer vom freien Ende 34 abgewandt liegenden axialen Seite der beiden Gruppen 28, 52 von Reibelementen angeordnet und bildet die axiale Abstützung für die Reibelemente 26, 50. An der anderen axialen Seite, also der dem freien Ende 34 der Eingangswelle 14 zugewandt liegenden axialen Seite der beiden Gruppen 28, 52 von Reibelementen, ist eine Anpressplatte 56 angeordnet. Diese kann beispielsweise, ähnlich wie die Reibelemente 50, mit dem zweiten Reibelemententräger 30 drehfest gekoppelt sein, bezüglich diesem jedoch axial bewegbar sein. Ein als Membranfeder oder Tellerfeder ausgestalteter Kraftspeicher 58 beaufschlagt die Anpressplatte 56 in axialer Richtung und presst diese auf die Reibelemente 26, 50 zu. Dadurch werden diese gegeneinander gepresst und somit in Reibeingriff gebracht. Die Abstützkraft liefert, wie bereits erwähnt, die Widerlagerplatte 54.

Der Kraftspeicher 58 ist radial außen in einem Abstützbereich 60 desselben an einem ringartigen Abstützelement 62 axial abgestützt, das radial innen an einer Schulter des zweiten Reibelements 30 abgestützt ist bzw. mit dem zweiten Reibelemententräger 30 fest gekoppelt ist. Durch das Abstützelement 62 ist gleichzeitig auch eine Arretierung der Lageranordnung 44 in der anderen axialen Richtung realisiert.

In einem radial weiter innen liegenden Beaufschlagungsbereich 64 beaufschlagt der Kraftspeicher 58 die Anpressplatte 56 und presst diese somit gegen die Reibelemente 26, 50. In seinem radial inneren Endbereich weist der ringartig ausgestaltete Kraftspeicher 58 einen Betätigungsbereich 66 auf, in welchem dieser durch einen als Betätigungskraftübertragungsorgan wirksamen Druckring 68 betätigt bzw. eine Ausrückkraft in diesen eingeleitet werden kann.

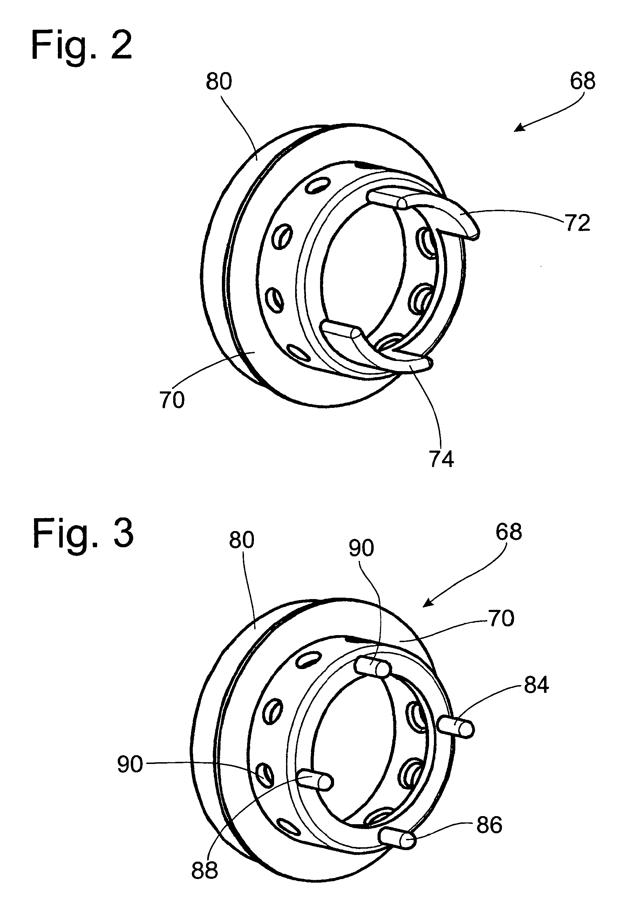

Ein Beispiel eines derartigen Druckrings 68 ist in Fig. 2 gezeigt. Dieser weist einen ringartigen Körperbereich 70 auf, von welchem zwei ringsegmentartige Betätigungsabschnitte 72, 74 sich axial weg erstrecken. Diese durchgreifen Öffnungen 76 bzw. 78 im zweiten Reibelemententräger 30. Mit seinem an der dem freien Ende 34 zugewandten axialen Seite der beiden Gruppen 28, 52 von Reibelementen liegenden Bereich, also einem jeweiligen axialen Endbereich der Betätigungsabschnitte 72, 74, belastet der Druckring 68 den Betätigungsbereich 66 des Kraftspeichers 58. In seinem anderen axialen Endbereich weist der Druckring 68 einen Lagerungsabschnitt 80 auf, in welchem dieser an einem in Fig. 1 erkennbaren Drehentkopplungslager 82 axial bzw. auch radial abgestützt ist.

Es sei hier noch auf die Fig. 3 verwiesen, welche eine alternative Ausgestaltungsform eines derartigen Druckrings 68 zeigt. Hier gehen vom ringartigen Körperabschnitt 70 vier in gleichmäßigem Umfangsabstand zueinander angeordnete Bolzen 84, 86, 88, 90 aus, welche entsprechende Öffnungen im zweiten Reibelemententräger 30 durchsetzen und auf den Betätigungsbereich 66 des Kraftspeichers 58 einwirken.

Man erkennt weiterhin, dass in dem ringartigen Körperabschnitt 70 des Druckrings 68 Öffnungen 90 gebildet sind. Schmierfluid, welches durch einen in der Eingangswelle 14 ausgebildeten Schmierfiluidkanal 92 in ein durch den Druckring 68 nach radial außen begrenztes erstes Schmierfluidreservoir 94 gelangt, kann durch diese Öffnungen 90 hindurch in ein durch den zweiten Reibelemententräger 30 nach radial außen begrenztes zweites Schmierfluidreservoir 96 gelangen und von dort durch Öffnungen 98 in den Bereich der Reibelemente 26, 50.

Eine allgemein mit 100 bezeichnete Betätigungskrafterzeugungsanordnung umfasst eine Zylinder/Kolben-Einheit 102 mit einer Zylinderbaugruppe 104 und einer Kolbenbaugruppe 106. Die Zylinder/Kolben-Einheit 102 ist ringartig und die Eingangswelle 14 umgebend aufgebaut und weist eine ringartige Zylinderkammer 108 auf, in welche ein Druckfluid, also beispielsweise Druckluft, eingespeist werden kann. Die Kolbenbaugruppe 106, welche fluiddicht in der Zylinderbaugruppe 104 axial verschiebbar aufgenommen ist, wirkt über das Drehentkopplungslager 82 mit dem Druckring 68 zusammen. Bei Einleitung von Druckfluid in die Zylinderkammer 108 wird die Kolbenbaugruppe 106 axial verschoben. Über das Drehentkopplungslager 82 wird somit auch der Druckring 68 axial in der Darstellung der Fig. 1 nach rechts, also in Richtung auf den Kraftspeicher 58 zu, verschoben. Dabei belasten die Betätigungsabschnitte 72, 74 den Betätigungsbereich 66 des Kraftspeichers 58 und schieben diesen in Richtung auf das freie Ende 34 zu. Entsprechend bewegt sich auch durch die Abstützung radial ganz außen der Beaufschlagungsbereich 64 in Richtung von der Widerlagerplatte 54 weg, so dass die Beaufschlagung der Anpressplatte 56 gemindert bzw. aufgehoben wird. Dies hat zur Folge, dass auch der Reibeingriff der Reibelemente 26, 52 entsprechend gemindert wird und somit die Kopplungsanordnung 10 in einen Ausrückzustand gebracht werden kann.

Auf Grund der Ausgestaltung des Kraftspeichers 58 als einseitig wirkender Hebel werden sehr günstige Kratftverhätnisse erhalten. Einerseits ist es möglich, den Kraftspeicher 58 sehr stark vorgespannt einzubauen, so dass der näher am Abstützbereich 60 als am Betätigungsbereich 66 liegende Beaufschlagungsbereich 64 eine entsprechend starke Einrückkraft auf die Anpressplatte 56 ausübt. Da für die Betätigung zum Ausrücken eine sehr große Hebellänge realisiert ist, kann auch bei stark vorgespanntem Einbau bzw. entsprechend starker Einrückkraft mit vergleichsweise geringer Ausrückkraft gearbeitet werden. Dies führt zu einer deutlich geringeren Belastung der Betätigungskrafterzeugungsanordnung 100 zur Erzeugung der Betätigungskraft und ermöglicht einen entsprechend einfachen Aufbau. Ferner wird es möglich, durch die erzielbare große Einrückkraft bei vergleichsweise geringer erforderlicher Ausrückkraft die erforderlichen Drehmomente auch mit geringerer Anzahl an Reibflächen, also geringerer Anzahl an Reibelementen, zu übertragen, was zu einer kompakten Bauweise beiträgt. Die niedrigere Ausrückkraft führt weiterhin zu einer besseren Steuerbarkeit der Ausrückvorgänge. Zu den vorteilhaften Kräfteverhältnissen trägt weiterhin bei, dass durch die Positionierung des Kraftspeichers 28 vergleichsweise nahe am freien Ende 34 der Eingangswelle 14 dieser Kraftspeicher 58 auch dort liegt, wo die Eingangswelle 14 bereits gegenüber ihrem Normaldurchmesser deutlich verjüngt ist. Dies ermöglicht es, den Kraftspeicher 58 weiter nach radial innen zu führen, beispielsweise so weit, dass dieser mit seinem radial inneren Endbereich sich mit dem Bereich größeren Durchmessers der Eingangswelle 14 radial überlappt oder näherungsweise den gleichen Durchmesser aufweist.

Ein weiterer Vorteil der geringeren Betätigungskraft bzw. Ausrückkraft ist, dass das zwischen dem Druckring 68 und der Kolbenbaugruppe 106 wirkende Drehentkopplungslager 82 auch nur weniger stark axial belastet wird und überdies nur dann belastet wird, wenn Ausrückvorgänge durchzuführen sind. Dies hat zur Folge, dass dieses Drehentkopplungslager 82 nicht notwendigerweise als Wälzkörperlager ausgebildet sein muss, wie es in der Fig. 1 gezeigt ist, sondern beispielsweise auch als Gleitlager mit einer Anlaufscheibe ausgebildet sein kann, was zu einer geringeren axialen Baugröße führt.

Ein weiterer Vorteil der vorangehend beschriebenen Ausgestaltung der Kupplungsanordnung 10 bzw. insbesondere der Betätigung derselben mit Positionierung der Betätigungskrafterzeugungsanordnung 100 an einer axialen Seite und des Kraftspeichers 58 an der anderen axialen Seite der beiden Gruppen 28, 52 von Reibelementen ist, dass eine axiale Belastung der Eingangswelle 14 lediglich dann auftritt, wenn die Kopplungsanordnung 10 in einen Ausrückzustand zu bringen ist bzw. gebracht ist. Nur dann wird durch die axiale Abstützung der Zylinderbaugruppe 104, welche mit dem Gehäuse 16 vorzugsweise drehfest gekoppelt ist, am Gehäuse 16 über den zweiten Reibelemententräger 30 eine Axiallast auf die Eingangswelle 14 ausgeübt, welche diese in der Fig. 1 nach rechts, also in Richtung ihres freien Endes 34 belastet. Im eingerückten Zustand der Kopplungsanordnung 10 ist die Eingangswelle 14 von axialen Kräften frei. Das heißt, dass vor allem dann, wenn die Eingangswelle 14 über das Antriebsrad 12 zur Drehung anzutreiben ist und mithin beispielsweise ein Kompressor zu betreiben ist, die allgemein als Anlaufscheiben bzw. Gleitlager ausgebildeten Axiallager, welche nur eine begrenzte axiale Reibbelastung aufnehmen können, eben nicht axial belastet werden. Soll eine derartige Drehkopplung nicht vorhanden sein, also die Drehmomentübertragungsverbindung über die Kopplungsanordnung 10 unterbrochen werden und diese in einen Ausrückzustand gebracht werden, wird zwar die Eingangswelle 14 axial belastet. Da in diesem Zustand jedoch kein Drehmoment auf diese Eingangswelle 14 übertragen wird, wird sie sich auch nicht drehen. In diesem Zustand werden also die Axiallager zwar axial belastet, da jedoch keine Rotation vorliegt, kann auch kein Reibverschleiß auftreten.

## Patentansprüche

1. Kopplungsanordnung zur wahlweisen Drehkopplung einer Eingangswelle, insbesondere eines Kompressors in einem Fahrzeug, mit einem Antriebsorgan, insbesondere Antriebsrad, umfassend:
- einen mit dem Antriebsrad (12) zur gemeinsamen Drehung um eine Drehachse (A) gekoppelten oder zu koppelnden ersten Reibelemententräger (18), mit welchem die Reibelemente (28) einer ersten Gruppe (28) von Reibelementen drehfest gekoppelt sind,
- einen mit der Eingangswelle (14) zur gemeinsamen Drehung um die Drehachse (A) gekoppelten oder zu koppelnden zweiten Reibelemententräger (30), mit welchem die Reibelemente (50) einer zweiten Gruppe (52) von Reibelementen drehfest gekoppelt sind,
- an einer in Richtung von einem freien Ende (34) der Eingangswelle (14) weg weisenden ersten axialen Seite der beiden Gruppen (28, 52) von Reibelementen eine bezüglich des zweiten Reibelemententrägers (30) axial abgestützte Widerlagerplatte (54),
- an einer in Richtung freies Ende (34) der Eingangswelle (14) weisenden zweiten axialen Seite der beiden Gruppen (28, 52) von Reibelementen eine durch einen Kraftspeicher (58) in Richtung auf die Reibelemente (26, 50) zu beaufschlagte Anpressplatte (56),
wobei der Kraftspeicher (58) ringartig ausgebildet ist und in einem radial äußeren Abstützbereich (60) bezüglich des zweiten Reibelemententrägers (30) axial abgestützt ist, in einem radial inneren Betätigungsbereich (66) durch ein Betätigungskraftübertragungsorgan (68) betätigbar ist und in einem radial zwischen dem Abstützbereich (60) und dem Betätigungsbereich (66) liegenden Beaufschlagungsbereich (64) die Anpressplatte (58) beaufschlagt.

2. Kopplungsanordnung nach Anspruch 1,
**dadurch gekennzeichnet, dass** das Betätigungskraftübertragungsorgan (68) in einem an der ersten axialen Seite der beiden Gruppen (28, 52) von Reibelementen liegenden Bereich zur Durchführung von Betätigungsvorgängen mit einer Betätigungskrafterzeugungsanordnung (100) zusammenwirkt und in einem an der zweiten axialen Seite der beiden Gruppen (28, 52) von Reibelementen liegenden Bereich mit dem Kraftspeicher (58) zu dessen Betätigung zusammenwirkt.

3. Kopplungsanordnung nach Anspruch 2,
**dadurch gekennzeichnet, dass** das Betätigungskraftübertragungsorgan (68) mit wenigstens einem Betätigungsabschnitt (72, 74; 84, 86, 88, 90) den zweiten Reibelemententräger (30) axial durchgreift.

4. Kopplungsanordnung nach Anspruch 2 oder 3,
**dadurch gekennzeichnet, dass** die Betätigungskrafterzeugungsanordnung (100) eine Zylinder/Kolben-Einheit (102) umfasst.

5. Kopplungsanordnung nach Anspruch 4,
**dadurch gekennzeichnet, dass** eine Zylinderbaugruppe (104) der Zylinder/Kolben-Einheit (102) bezüglich eines die Eingangswelle (104) aufnehmenden Gehäuses (16) festgelegt oder festlegbar ist und dass eine Kolbenbaugruppe (106) der Zylinder/Kolben-Einheit (102) über ein Drehentkopplungslager (82) mit dem Betätigungskraftübertragungsorgan (68) zusammenwirkt.

6. Kopplungsanordnung nach Anspruch 5,
**dadurch gekennzeichnet, dass** das Drehentkopplungslager (82) ein Wälzkörperlager umfasst.

7. Kopplungsanordnung nach Anspruch 5,
**dadurch gekennzeichnet, dass** das Drehentkoppkungslager ein Gleitlager umfasst.

8. Kopplungsanordnung nach einem der Ansprüche 1 bis 7,
**dadurch gekennzeichnet, dass** der Beaufschlagungsbereich (64) des Kraftspeichers näher am Abstützbereich (60) als am Betätigungsbereich (66) liegt.

9. Kombination einer Eingangswelle (14), insbesondere eines Kompressors in einem Fahrzeug, mit einer Kopplungsanordnung (10) nach einem der vorangehenden Ansprüche, wobei die Eingangswelle (14) in ihrem mit dem zweiten Reibelemententräger (30) zur gemeinsamen Drehung um die Drehachse (A) zu koppelnden Endbereich (32) in Richtung zu einem freien Ende (34) hin sich verjüngend ausgebildet ist und wobei der Betätigungsbereich (66) des Kraftspeichers (58) sich derart weit nach radial innen erstreckt, dass er sich mit dem nicht verjüngten Bereich der Eingangswelle (14) radial überlappt oder näherugsweise auf dessen radialem Niveau endet
